Europäisches Patentamt

European Patent Office

Office européen des brevets

(11) Publication number : **0 485 192 A2**

# EUROPEAN PATENT APPLICATION

(21) Application number : **91310261.2**

(22) Date of filing : **06.11.91**

(51) Int. Cl.$^5$ : **G06F 15/64**

(30) Priority : **07.11.90 GB 9024185**

(43) Date of publication of application :
**13.05.92 Bulletin 92/20**

(84) Designated Contracting States :
**DE FR IT**

(71) Applicant : **GEC-FERRANTI DEFENCE
SYSTEMS LTD.
The Grove, Warren Lane
Stanmore, Middlesex HA7 4LY (GB)**

(72) Inventor : **Thomson, Richard Charles
50 Craigs Crescent
Edinburgh EH12 8HU (GB)**

(74) Representative : **Waters, Jeffrey et al
GEC Patent Department, GEC Marconi
Limited, West Hanningfield Road
Great Baddow, Chelmsford, Essex CM2 8HN
(GB)**

(54) **Security system.**

(57)    The underside of a vehicle is imaged by means of a sensor 1 located behind a lens 2 in a recess 4 in a speed hump or pit over which a vehicle may drive. The sensor images one complete sideways strip of the vehicle at a time, and this is read out as a line into a frame store. Successive lines are read into the the frame store at a rate dependent upon the relative speed of the speed of the vehicle relative to the sensor. The speed of readout of the sensor may be reduced for the outer portions of the line compared to the central region in order to correct for distortion resulting from viewing the size of vehicle at an oblique angle. An undistorted image of the underside of the vehicle may be built up without interrupting vehicle flow.

FIG 1

This invention relates to security systems, especially for vehicles and in particular to imagers for the underside of vehicles.

The common method of inspecting the underside of vehicles at present simply involves the use of a mirror and torch at the end of a long handle, and this is unsatisfactory.

It has been proposed to image the underside of a vehicle using a TV monitor connected to a camera set into a pit or mounted in a hump in the road over which the vehicle travels, but the camera has to be wide angle and the image is consequently very distorted.

The invention provides an imager for imaging the underside of a vehicle, comprising a sensor for viewing successive transverse strips of the vehicle during relative longitudinal movement between the vehicle and the sensor, and means to produce an image of the underside of the vehicle from the output of the sensor for successive transverse strips and from the relative longitudinal velocity between the vehicle and the sensor.

Imaging the underside of the vehicle in strips results in less distortion in the final image compared to imaging a two dimensional area all at one time.

The sensor may be a single line of photosensitive elements, and the image producing means may be a frame store, into which the output of the sensor is repeatedly written. The lines may then be entered into the frame store at a location in the frame related to the speed with which the vehicle travels relative to the sensor.

An imager for imaging the underside of a vehicle constructed in accordance with the invention will now be described, by way of example, with reference to the accompanying drawings, in which:

Figure 1 is a schematic view of the imager in use;

Figure 2 is a schematic view of the image to be built-up; and

Figure 3 is a block schematic diagram of the circuit of the imager.

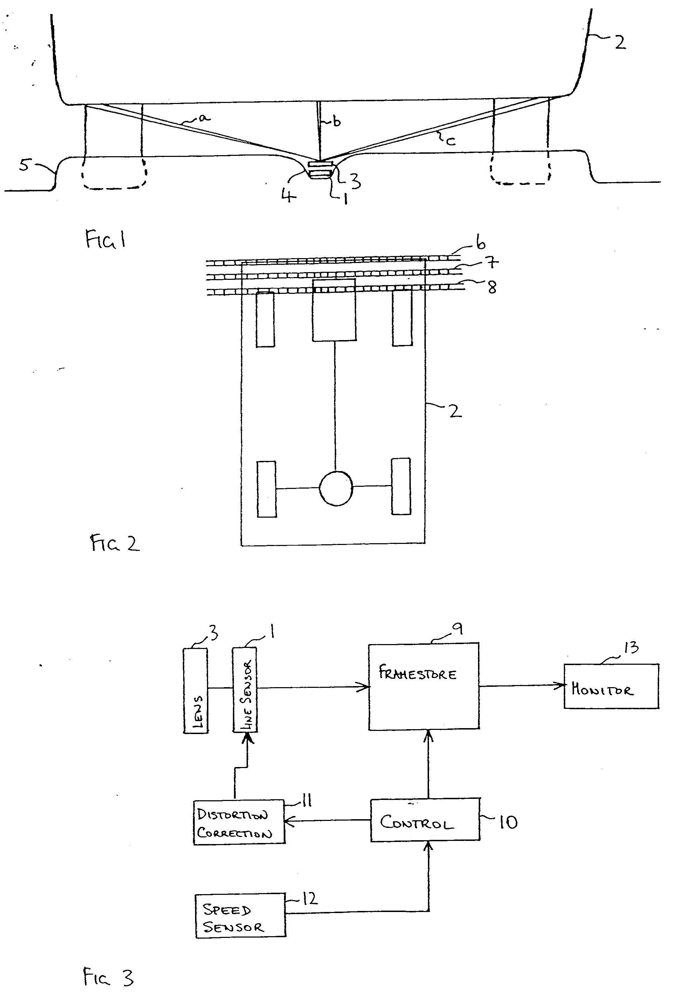

Referring to Figure 1, a sensor 1 for imaging successive transverse strips of a vehicle 2 is mounted behind a lens 3 in a recess 4 in a speed hump 5 over which the vehicle is travelling. As the vehicle travels over the hump, the sensor views successive transverse strips, such as strips 6 - 8, extending across the whole width of the vehicle, in order to build up an image of the underside of the vehicle. The sensor, which may be a diode array or other solid state device, may have 2,000 elements along its length.

Referring to Figure 3, the line sensor is read out into a frame store 9 under the control of electronic control means 10 and via a distortion correction means 11 which will be referred to later. The signal from the line sensor, which is representative of the charge storage pattern resulting from the imaging of a particular strip on the sensor, is clocked out under the control of the electronic control means 10, which simultaneously increments addresses of storage locations for the incoming data in order that one line read out from the line sensor is stored in one line in the frame store. While the line is being read in, another counter increments in order that the next strip imaged on the sensor may be read into the frame store at the appropriate line position. This counter is under the control of a clock which runs at a speed dependent on the velocity of the vehicle as monitored by a speed sensor 12. Thus, for a faster moving vehicle, the lines are read in more quickly and for a slower moving vehicle, the lines are read in more slowly. Thus, the image in the frame store can be arranged to have equal horizontal and vertical resolution and could be displayed easily in the correct proportions for the vehicle in question. It is not necessary for there to be a spacing between adjacent lines. The readout speed can be adjusted and the incrementing of successive lines can be adjusted so that successive lines actually overlap.

To refer to the distortion correction means, if one considers the fan beams a, b, c shown in Figure 1, which, since they are of the same angle, will be imaged on the same number of elements of the sensor 1, it will be apparent that structural variations of a given size will be represented by more sensor elements if those variations are in the centre of the vehicle than if they are at either side. Consequently, the image will be distorted by compressing the outer regions of the vehicle in a lateral direction and expanding the central regions in a lateral direction. To overcome this, the readout speed of the line sensor could be varied along a line under the control of the distortion correction means so that equal lateral distances on the vehicle correspond to equal numbers of elements on the sensor, thus correcting the lateral distortion. However, it is not essential that distortion correction is carried out electronically. If desired, the lens 3 could be suitably shaped to provide distortion correction optically.

After or during the time that an image of the entire vehicle has been built-up in the frame store, it may be transferred to the monitor 13 where it can be inspected.

Thus, with the invention the vehicle's underside may be inspected instantaneously without any disruption of the traffic flow. This means that the system lends itself to areas such as the entrance to car parks, institutions, ferries or vehicles boarding trains or transporters.

A vehicle speed of a little under 10 mph would permit equal resolution along and across the vehicle with a 2000 element line sensor and a 10 MHz readout rate, for a vehicle size of 4.5 m x 1.7 m (equal lengthwise resolutions would require $2000 \times {}^{4.5}/_{1.7} = 5300$ lines, and this would require 5300 x 200 .s to read out = 1.06 seconds per picture = 4.25 metres/sec = 9.5 mph). Slower speeds allow higher resolution or longer exposure, and hence less light. The minimum object detail would be 0.85 mm. If an object detail of three times this figure was considered acceptable, the vehicle could travel three times the figure.

Of course modifications may be made to the system described above without departing from the scope of the invention. Thus, for example, it is not necessary to employ a sensor which views an entire strip simultaneously and if desired the image could be built up on the sensor sequentially such as if a laser was used to scan sideways strips of the vehicle. Further, various means may be used for measuring the speed of the vehicle, such as Doppler radar, or measuring the Doppler shift of such a laser scanning system as referred to, or by measuring the time of breaking of sequential light beams. Indeed, certain speed ramps may be so constructed that all vehicles drive over them at more or less the same speed, and the speed sensor could then be dispensed with and the lines would be read into the frame store at a location dependent upon the assumed average speed of travel. Instead of the sensor and lens being mounted in a recess in a road hump, they could instead be mounted in a pit recessed into the road.

As another alternative, the camera could image at one or more wavelengths i.e. it could image at visible wavelengths or look for hot and cold spots that were not normal.

Further, if desired, the sensor could be mounted on a trolley which could be moved under the vehicle, remotely if desired. A jockey wheel on the trolley could be used to sense the relative velocity of travel of the sensor and vehicle.

Finally, instead of the visual inspection of the image on a monitor, it would be possible to process the image by a computer (analyser) and compare it to a standard template for that vehicle or class of vehicle. The latter information could be fed in by an operative, but it would be conceivable for a camera to read the vehicle's number plate and feed the type of vehicle into the analyser by immediate access to the computer of the National Vehicle Registration Centre. In this case, the monitor could be dispensed with. A locally stored template may also be used which would allow for day to day or entrance/exit differences to be detected.

**Claims**

1. An imager for imaging the underside of a vehicle, comprising a sensor for viewing successive transverse strips of the vehicle during relative longitudinal movement between the vehicle and the sensor, and means to produce an image of the underside of the vehicle from the output of the sensor for successive transverse strips and from the relative longitudinal velocity between the vehicle and the sensor.

2. An imager as claimed in claim 1, including a frame-store arranged to receive the output from the sensor into lines in the frame store, the lines being read into the frame store at a rate dependent on the relative longitudinal velocity of the vehicle and of the sensor, to produce a storage pattern having the correct proportions of the vehicle's underside.

3. An imager as claimed in claim 1 or claim 2, in which the rate of readout of the sensor is variable along the length of a line to compensate for lateral distortion.

4. An imager as claimed in any one of claims 1 to 3, in which the sensor is arranged in a recess in a speed hump or pit over which the vehicle may drive.

5. An imager as claimed in any one of claims 1 to 4, including a monitor into which the output of the frame store may be read.

6. An imager as claimed in any one of claims 1 to 4, including a computer in which templates of the underside of vehicles of various types are stored, and means for comparing the image stored in the frame store with the template in the computer.

Fig 1

Fig 2

Fig 3